# EUROPEAN PATENT APPLICATION

(11) **EP 4 632 001 A1**
(43) Date of publication of application: **15.10.2025**
(21) Application number: 23900702.4
(22) Date of filing: 06.12.2023
(51) Int. Cl.: C08L 23/16, C08F 210/18, C08K 5/01, C08K 5/14, C08L 23/10, C08L 53/00

(54) **THERMOPLASTIC ELASTOMER COMPOSITION AND MOLDED ARTICLE COMPRISING SAME**

(30) Priority: 07.12.2022 JP 2022195759
(71) Applicant: Mitsui Chemicals, Inc., Tokyo 104-0028 (JP)
(72) Inventor: KANEHARA, Takeshi, Sodegaura-shi, Chiba 299-0265 (JP); CHIGAMA, Kakeru, Sodegaura-shi, Chiba 299-0265 (JP); KUSUMOTO, Remi, Sodegaura-shi, Chiba 299-0265 (JP); KITAHARA, Yasuhiro, Sodegaura-shi, Chiba 299-0265 (JP); NAKANO, Hidetake, Sodegaura-shi, Chiba 299-0265 (JP)
(74) Representative: Hoffmann Eitle
(86) International application number: PCT/JP2023/043695
(87) International publication number: WO 2024/122590

(57) **Abstract**

An object of the present invention is to provide a thermoplastic elastomer composition and a molded body which have excellent fogging resistance (low haze) and flexibility and can further reduce the environmental load when a biomass-derived softener is used. The thermoplastic elastomer composition contains (A) 100 parts by mass of an ethylene·α-olefin nonconjugated polyene copolymer; (B) 10 to 200 parts by mass of a polypropylene-based resin; and (C) 10 to 200 parts by mass of a softener having a paraffinic carbon atom content (% Cₚ) of 80% or more and 100% or less, as measured according to ASTM D3238-85 or ASTM D2140, and at least a portion of the composition is cross-linked.

## Description

### Technical Field

The present invention relates to a thermoplastic elastomer composition and a molded body including the same.

### Background Art

Bioplastics, which include materials obtained from biomass-derived raw materials, are becoming more and more important due to growing environmental awareness and the expected reduction in reserves of fossil resources such as natural gas.

Among plastic materials, olefin-based thermoplastic elastomers are a group of polymers increasingly important in industry, and are used in a variety of applications, for example in the automotive sector, consumer products, packaging, pharmaceuticals, and construction sector. For this reason, even materials containing a thermoplastic elastomer are required to reduce the environmental load.

It is known that a softener such as a mineral oil softener is blended with the thermoplastic elastomer to increase flexibility and rubber elasticity. In this regard, an attempt has been made to use a component obtained from a biomass-derived raw material as a softener or plasticizer to be blended into a composition containing a thermoplastic elastomer. For example, Patent Document 1 discloses a polymer composition containing a thermoplastic elastomer, rubber, or bioplastic, and a plasticizer, wherein the plasticizer is a vegetable raw material, a raw material product based on an industrial plant, or a raw material product based on an animal fat source.

### Citation List

### Patent Document

Patent Document 1: JP2019-529688A

### Summary of Invention

### Technical Problem

A thermoplastic elastomer composition is required to have excellent fogging resistance (low haze) and flexibility depending on the application and molding method, for example. However, Patent Document 1 does not disclose what conditions are necessary for the composition to have excellent fogging resistance and flexibility.

Therefore, an object of the present invention is to provide a thermoplastic elastomer and a molded body which have excellent fogging resistance (low haze) and flexibility and can further reduce the environmental load when a biomass-derived softener is used.

### Solution to Problem

As a result of diligent studies to solve the above problem, the present inventors have found that the above problem can be solved with a thermoplastic elastomer composition containing a polypropylene-based resin, an ethylene·α-olefin nonconjugated polyene copolymer, and a softener at a specific blending ratio, wherein the softener satisfies specific conditions, and a molded body containing the thermoplastic elastomer composition, thus completing the present invention.

Specifically, the present invention relates to the following [1] to [20].

[1] A thermoplastic elastomer composition comprising components (A) to (C) below, wherein at least a portion of the composition is cross-linked:
   (A) 100 parts by mass of an ethylene·α-olefin nonconjugated polyene copolymer;
   (B) 10 to 200 parts by mass of a polypropylene-based resin; and
   (C) 10 to 200 parts by mass of a softener having a paraffinic carbon atom content (% Cₚ) of 80% or more and 100% or less, as measured according to ASTM D3238-85 or ASTM D2140.
[2] The thermoplastic elastomer composition according to [1], wherein the softener (C) comprises a biomass-derived softener.
[3] The thermoplastic elastomer composition according to [1], wherein the softener (C) is a biomass-derived softener.
[4] The thermoplastic elastomer composition according to any one of [1] to [3], wherein the softener (C) further has a naphthenic carbon atom content (% C_{N}) of 20% or less and an aromatic carbon atom content (% C_{A}) of 5% or less, as measured according to ASTM D3238-85 or ASTM D2140.
[5] The thermoplastic elastomer composition according to any one of [1] to [4], wherein the softener (C) has a weight-average molecular weight (Mw) in terms of polystyrene measured by gel permeation chromatography (GPC) of 900 or more.
[6] The thermoplastic elastomer composition according to any one of [1] to [5], wherein an evaporation loss of the softener (C) at 200°C under atmospheric pressure for 1 hour is 0.2% by mass or less.
[7] The thermoplastic elastomer composition according to any one of [1] to [6], wherein the softener (C) has a kinematic viscosity at 40°C of 40 mm²/s or more and 150 mm²/s or less.
[8] The thermoplastic elastomer composition according to any one of [1] to [7], wherein the softener (C) has a density at 15°C of 865 kg/m³ or less.
[9] The thermoplastic elastomer composition according to any one of [1] to [8], wherein a pour point of the softener (C) is -20°C or lower.
[10] The thermoplastic elastomer composition according to any one of [1] to [9], having a melt flow rate (MFR; 230°C, 10 kg load) measured according to JIS K 7210 being 1 to 150 g/10 min.
[11] The thermoplastic elastomer composition according to any one of [1] to [10], wherein the polypropylene-based resin (B) is at least one selected from the group consisting of a propylene homopolymer, a random copolymer of propylene and an α-olefin other than propylene, and a block copolymer of propylene and an α-olefin other than propylene.
[12] The thermoplastic elastomer composition according to any one of [1] to [11], wherein the polypropylene-based resin (B) consists of a block copolymer of propylene and an α-olefin other than propylene.
[13] The thermoplastic elastomer composition according to any one of [1] to [12], wherein the polypropylene-based resin (B) has a melting point of 80 to 170°C, and the composition further comprises 40 parts by mass or less of a component (D) below:
   (D) a propylene-ethylene copolymer having a melting point of 70°C or lower or having no melting point observed, and having a density of 800 to 900 kg/m³.
[14] The thermoplastic elastomer composition according to any one of [1] to [13], further comprising a crosslinking agent.
[15] The thermoplastic elastomer composition according to [14], comprising 0.05 to 3 parts by mass of the crosslinking agent per 100 parts by mass of the ethylene·α-olefin nonconjugated polyene copolymer (A).
[16] The thermoplastic elastomer composition according to [14], comprising 0.10 to 1 part by mass of the crosslinking agent per 100 parts by mass of the ethylene·α-olefin nonconjugated polyene copolymer (A).
[17] The thermoplastic elastomer composition according to any one of [14] to [16], wherein the crosslinking agent is an organic peroxide.
[18] A molded body comprising the thermoplastic elastomer composition according to any one of [1] to [17].
[19] A film or sheet comprising the molded body according to [18].
[20] An automobile interior material comprising the molded body according to [19].

### Advantageous Effects of Invention

According to the present invention, it is possible to provide an olefin-based thermoplastic elastomer and a molded body which have excellent fogging resistance (low haze) and flexibility and which can further reduce environmental load when a biomass-derived softener is used.

### Description of Embodiments

Hereinafter, specific embodiments of the present invention will be described in detail. However, the present invention is not limited in any way to the following embodiments but can be implemented with appropriate modifications within the intended scope of the present invention.

In the present specification, the term "polymer" is used in an inclusive sense of a homopolymer and a copolymer, unless otherwise stated.

In the present specification, a numerical range expressed with "to" means a range including numerical values placed before and after "to" as a lower limit value and an upper limit value, respectively.

In the present specification, the amount of the respective component in a composition means, when there are a plurality of substances corresponding to the component in the composition, the total amount of the substances present in the composition, unless otherwise specified.

### [Thermoplastic elastomer composition]

The thermoplastic elastomer composition according to the present invention contains components (A) to (C) below, and at least a portion of the composition is cross-linked:
(A) 100 parts by mass of an ethylene·α-olefin nonconjugated polyene copolymer;
(B) 10 to 200 parts by mass of a polypropylene-based resin; and
(C) 10 to 200 parts by mass of a softener having a paraffinic carbon atom content (% Cₚ) of 80% or more and 100% or less, as measured according to ASTM D3238-85 or ASTM D2140.

Hereinafter, the thermoplastic elastomer composition according to the present invention will be described in detail.

### <Ethylene·α-olefin nonconjugated polyene copolymer (A)>

The ethylene·α-olefin nonconjugated polyene copolymer(A) (hereinafter, also referred to as "copolymer (A)" and sometimes referred to as "component (A)") used in the present invention is a copolymer composed of ethylene, an α-olefin other than ethylene, preferably an α-olefin having 3 to 20 carbon atoms, and a nonconjugated polyene, preferably a nonconjugated diene.

The copolymer (A) can be produced by various known methods using a Ziegler-Natta catalyst or a metallocene catalyst.

The ethylene/α-olefin (molar ratio) in the copolymer (A) is usually 85/15 to 55/45, preferably 83/17 to 60/40.

Specific examples of the α-olefin include propylene, 1-butene, 1-pentene, 1-hexene, 1-octene, 1-decene, 2-methyl-1-propene, 3-methyl-1-pentene, 4-methyl-1-pentene, and 5-methyl-1-hexene. In one preferred aspect of the present invention, the α-olefin is propylene.

Specific examples of the nonconjugated diene include cyclic dienes, such as dicyclopentadiene, cyclooctadiene, methylenenorbornene (e.g., 5-methylene-2-norbornene), ethylidenenorbornene (e.g., 5-ethylidene-2-norbornene), methyltetrahydroindene, 5-vinyl-2-norbornene, 5-isopropylidene-2-norbornene, 6-chloromethyl-5-isopropenyl-2-norbornene, and norbornadiene; and
chain dienes, such as 1,4-hexadiene, 3-methyl-1,4-hexadiene, 4-methyl-1,4-hexadiene, 5-methyl-1,4-hexadiene, 4,5-dimethyl-1,4-hexadiene, 6-methyl-1,6-octadiene, 7-methyl-1,6-octadiene, 6-ethyl-1,6-octadiene, 6-propyl-1,6-octadiene, 6-butyl-1,6-octadiene, 6-methyl-1,6-nonadiene, 7-methyl-1,6-nonadiene, 6-ethyl-1,6-nonadiene, 7-ethyl-1,6-nonadiene, 6-methyl-1,6-decadiene, 7-methyl-1,6-decadiene, 6-methyl-1,6-undecadiene, and 7-methyl-1,6-octadiene. In one preferred aspect of the present invention, the nonconjugated diene is a cyclic diene, particularly preferred examples of which include 5-ethylidene-2-norbornene and 5-vinyl-2-norbornene.

The Mooney viscosity ML₁₊₄ (125°C) of the copolymer (A) is usually 10 to 200, preferably 20 to 160, more preferably 40 to 150, and the iodine value is usually 3 to 25, preferably 5 to 25.

The copolymer (A) can be present in any cross-linked state, such as an uncross-linked state, a partially cross-linked state, or a completely cross-linked state, in the thermoplastic elastomer, but is required to be present in a completely or partially cross-linked state in the present invention.

It is noted that the copolymer (A) preferably has a kinematic viscosity at 40°C of more than 500,000 mm²/s. As used herein, "more than 500,000 mm²/s" is a concept that includes cases where a kinematic viscosity cannot be measured due to low flowability.

### <Polypropylene-based resin (B)>

The thermoplastic elastomer composition of the present invention contains a polypropylene-based resin (B) (hereinafter, sometimes referred to as "component (B)"). The polypropylene-based resin (B) used in the present invention is preferably a homopolymer of propylene or a copolymer of propylene and an olefin other than propylene. In the present invention, the polypropylene-based resin (B) is preferably at least one selected from the group consisting of a propylene homopolymer, a random copolymer of propylene and an α-olefin other than propylene, and a block copolymer of propylene and an α-olefin other than propylene. In one particularly preferred aspect of the present invention, the polypropylene-based resin (B) consists of a block copolymer of propylene and an α-olefin other than propylene.

Suitable starting material olefins other than propylene that constitute the polypropylene-based resin (B) are preferably α-olefins having 2 or 4 to 20 carbon atoms, and specific examples thereof include ethylene, 1-butene, 1-pentene, 1-hexene, 1-octene, 1-decene, 2-methyl-1-propene, 3-methyl-1-pentene, 4-methyl-1-pentene, and 5-methyl-1-hexene. Of these olefins, ethylene is preferred.

The arrangement of monomers constituting the polypropylene-based resin (B) may be a random type or block type, although the arrangement is not limited as long as a resinous product is obtained. Such polypropylene-based resins can be used singly or in combinations of two or more thereof.

The polypropylene-based resin (B) used in the present invention is preferably a propylene-based polymer having a propylene content of 40 mol% or more, and more preferably a propylene polymer having a propylene content of 50 mol% or more.

Among these polypropylene-based resins, for example, a propylene homopolymer, a propylene/ethylene block copolymer, a propylene/ethylene random copolymer, and a propylene/ethylene/butene random copolymer are particularly preferred.

The polypropylene-based resin (B) used in the present invention has a melting point in the range of 80 to 170°C, preferably 120 to 170°C.

The polypropylene-based resin (B) used in the present invention usually has an MFR (ASTM D1238-65T, 230°C, 2.16 kg load) in the range of 0.01 to 100 g/10 min, preferably 0.05 to 50 g/10 min.

The polypropylene-based resin (B) used in the present invention preferably has an isotactic structure as a stereostructure but may have a syndiotactic structure, a structure in which an isotactic structure and a syndiotactic structure are mixed or partially include an atactic structure in addition to these structures.

The polypropylene-based resin (B) used in the present invention is obtained by polymerization by various known polymerization methods.

The polypropylene-based resin (B) used in the present invention may be a polymer obtained using only a fossil fuel-derived olefin such as fossil fuel-derived propylene as a raw material, a polymer obtained using only a biomass-derived olefin such as biomass-derived propylene as a raw material, a polymer obtained using a mixture of a fossil fuel-derived olefin and a biomass-derived olefin as a raw material, or a mixture of two or more of these polymers.

As used herein, a fossil fuel refers to petroleum, coal, natural gas, shale gas, and other fossilized remains formed by the deposition and pressurization of dead plants and animals over hundreds of millions of years, and the fossil fuel-derived olefin refers to an olefin obtained from this fossil fuel. Since it has been aged sufficiently longer than a half-life of 5,730 years of an ¹⁴C isotope, ¹⁴C is not detectable in fossil-derived carbon.

The biomass refers to any renewable natural raw material of, for example, plant or animal origin, including fungi, yeast, algae, and bacteria, and a residue thereof. The biomass-derived olefin refers to an olefin obtained from this biomass. Biomass-derived carbon contains a certain amount of ¹⁴C isotope as carbon (in a proportion of about 10⁻¹²).

The content of the polypropylene-based resin (B) is 10 to 200 parts by mass, preferably 15 to 180 parts by mass, more preferably 20 to 150 parts by mass, and even more preferably 25 to 130 parts by mass per 100 parts by mass of the ethylene·α-olefin nonconjugated polyene copolymer (A). In a case where the polypropylene-based resin (B) is composed of two or more polymers, the numerical range described above is applied to the total amount of these polymers.

It is noted that the polypropylene-based resin (B) preferably has a kinematic viscosity at 40°C of more than 500,000 mm²/s. As used herein, "more than 500,000 mm²/s" is a concept that includes cases where a kinematic viscosity cannot be measured due to low flowability.

### <Softener (C)>

The softener (C) used in the present invention (hereinafter, sometimes referred to as "component (C)") has a paraffinic carbon atom content (% Cₚ) of 80% or more and 100% or less, as measured according to ASTM D3238-85 or ASTM D2140. By using the softener (C), the resulting thermoplastic elastomer composition has excellent fogging resistance (low haze) and flexibility.

From the viewpoint of compatibility with the polypropylene-based resin in the resulting thermoplastic elastomer composition, and from the viewpoint of more excellent fogging resistance and less flexibility of the resulting thermoplastic elastomer composition, the paraffinic carbon atom content (% Cₚ) is preferably 85% or more and 100% or less, more preferably 90% or more and 100% or less, and even more preferably 95% or more and 100% or less.

From the above viewpoints, the naphthenic carbon atom content (C_{N}) is usually 20% or less (i.e., 0% or more and 20% or less), preferably 15% or less (i.e., 0% or more and 15% or less), more preferably 10% or less (i.e., 0% or more and 10% or less), and even more preferably 5% or less (i.e., 0% or more and 5% or less).

In view of ensuring sufficient heat resistance, on the other hand, the aromatic carbon atom content (% C_{A}) is usually 5% or less (i.e., 0% or more and 5% or less), preferably 2.0% or less (i.e., 0% or more and 2.0% or less), more preferably 1.0% or less (i.e., 0% or more and 1.0% or less), and even more preferably 0.1% or less (i.e., 0% or more and 0.1% or less).

The above % C_{P}, % C_{N}, and % C_{A} are determined by a measurement method according to ASTM D3238-85 or ASTM D2140. The above % C_{P},% C_{N}, and % C_{A} mean the percentage of the paraffinic carbon number to the total carbon number, the percentage of the naphthenic carbon number to the total carbon number, and the percentage of the aromatic carbon number to the total carbon number, respectively, determined by the above measurement method.

ASTM D3238-85 covers Standard Test Method for Calculation of Carbon Distribution and Structural Group Analysis of Petroleum Oils by the n-d-M Method and specifies ring analysis by the n-d-M method. The ring analysis by the n-d-M method is a type of structural group analysis used for compositional analysis of high-boiling-point petroleum fractions and a method for determining the following carbon distribution and ring content from measurement values of refractive index n, density d, and average molecular weight M at 20°C or 70°C of a sample using an equation or diagram.

### · Carbon distribution

Percentage of aromatic carbon: % C_{A}
Percentage of naphthenic carbon: % C_{N}
Percentage of paraffinic carbon: % C_{P}
Percentage of ring structure carbon: % C_{R} = % C_{A} + % C_{N}

### · Ring content

Number of aromatic rings: R_{A}
Number of naphthene rings: R_{N}

On the other hand, ASTM D2140 covers Standard Practice for Calculating Carbon-Type Composition of Insulating Oils of Petroleum Origin. ASTM D2140 allows calculations to be made for the carbon-type composition of the softener (C) using viscosity, density, and refractive index, and the percentage of aromatic carbon (% C_{A}), percentage of naphthenic carbon (% C_{N}), and percentage of paraffinic carbon (% C_{P}) can be determined through ring analysis. In the present invention, the percentage of aromatic carbon (% C_{A}), the percentage of naphthenic carbon (% C_{N}), and the percentage of paraffinic carbon (% C_{P}) obtained in ASTM D2140 may be adopted in place of the percentage of aromatic carbon (% C_{A}), the percentage of naphthenic carbon (% C_{N}), and the percentage of paraffinic carbon (% C_{P}) obtained in ASTM D3238-85, respectively, without practical problems.

The softener (C) used in the present invention has a weight-average molecular weight (Mw) in terms of polystyrene as measured by gel permeation chromatography (GPC) of preferably 900 or more, more preferably 950 or more, even more preferably 1000 or more, and particularly preferably 1050 or more from the standpoint of fogging properties. On the other hand, the upper limit of the Mw is not particularly limited as long as the object of the present invention is not impaired, but is preferably 1500 or less.

The evaporation loss of the softener (C) at 200°C under atmospheric pressure for 1 hour is preferably 0.2% by mass or less, more preferably 0.15% by mass or less, and even more preferably 0.13% by mass or less from the standpoint of fogging properties. The evaporation loss at 200°C under atmospheric pressure for 3 hours is preferably 1.2% by mass or less, more preferably 1.0% by mass or less, and even more preferably 0.8% by mass or less. The evaporation loss at 200°C under atmospheric pressure for 5 hours is preferably 2.5% by mass or less, more preferably 2.0% by mass or less, and even more preferably 1.5% by mass or less. By using a softener with an evaporation loss at a certain level or less as the softener (C), the thermoplastic elastomer composition of the present invention has a low content of volatile components and thus good fogging properties.

It is noted that the evaporation loss of the softener (C) is specifically a value measured by the method described in the section of "(6) Heating evaporation loss" in Examples below.

The softener (C) has a kinematic viscosity at 40°C of 500,000 mm²/s or less in most cases. The kinematic viscosity is preferably 200 mm²/s or less, more preferably 150 mm²/s or less, and even more preferably 90 mm²/s or less from the standpoint of compatibility with the polypropylene-based resin and formability. The kinematic viscosity of the softener (C) at 40°C is preferably 40 mm²/s or more, and more preferably 50 mm²/s or more.

It is noted that the kinematic viscosity of the softener (C) is specifically a value measured at a predetermined measurement temperature (e.g., 40°C) according to the measurement method of ASTM D 445.

The density of the softener (C) at 15°C is preferably 890 kg/m³ or less, more preferably 865 kg/m³ or less, and even more preferably 850 kg/m³ or less from the viewpoint of reducing the weight of the molded body. The density of the softener (C) at 15°C is preferably 800 kg/m³ or more, and more preferably 820 kg/m³ or more.

It is noted that the density of the softener (C) is specifically a value measured at a predetermined measurement temperature (e.g., 15°C) according to the measurement method of ASTM D 4052.

The pour point of the softener (C) is preferably -10°C or lower, more preferably -15°C or lower, and even more preferably -20°C or lower from the standpoint of good low-temperature properties. The pour point of the softener (C) is usually -50°C or higher, preferably -40°C or higher, and more preferably -35°C or higher.

It is noted that the pour point of the softener (C) is a value measured according to ASTM D-6749.

As the softener (C), any softener can be used as long as it satisfies the above properties. For example, the softener (C) may be a refined mineral oil, a synthetic oil obtained by polymerizing an olefin-based monomer, a biomass-derived softener described later, or a mixture of two or more thereof.

Among these, the softener (C) preferably includes a biomass-derived softener, and is more preferably a biomass-derived softener. By using a biomass-derived softener as the softener (C), the resulting thermoplastic elastomer composition not only has excellent flowability, little hue unevenness, excellent molding appearance, but also reliably reduce the environmental load. The biomass-derived softener also tends to have a lower density (e.g., 865 kg/m³ or less) at 15°C than refined mineral oil and synthetic oil.
Therefore, when the softener (C) is a biomass-derived softener, the softener (C) tends to have a lower density (e.g., 865 kg/m³ or less) at 15°C than refined mineral oil and synthetic oil, which is also advantageous from the viewpoint of reducing the weight of the resulting molded body.

The biomass-derived softener is a softener obtained from a plant such as a cultivated plant and a natural plant or an animal fat source as a raw material. The softener (C) may contain not only a biomass-derived softener but also a fossil fuel-derived softener, but from the viewpoint of achieving a greater reduction in environmental load, the softener (C) desirably includes a biomass-derived softener without a fossil fuel-derived softener. It is noted that the fossil fuel-derived softener means a softener obtained from a fossil fuel such as natural gas through a production process including a step such as processing.

The biomass-derived softener obtained from a plant or animal fat source as a raw material is an organic compound or a mixture of organic compounds obtained from the raw materials through a production process including steps such as extraction and processing.

The biomass-derived softener often contains a plurality of specific organic compounds, derived from a plurality of organic compounds contained in raw materials, such as plants (e.g., sugar cane, rapeseed) and animal fat sources (e.g., butter), and these organic compounds in a specific composition distribution. In general, a biomass-derived softener and a fossil fuel-derived softener are thus unlikely to have the same chemical composition.

Examples of plants suitable as raw materials for the biomass-derived softener include trees, sunflower, canola, rapeseed, corn, linseed, jojoba, peanut, coconut, thistle, castor bean, soybean, palm, hemp, poppy, olive, sugar cane, sugar beet, and other grains.

Examples of animal fat sources suitable as raw materials for the biomass-derived softener include butter, lard, grease, tallow, herring, sardine, and other animal fats.

The raw material for the biomass-derived softener is preferably a plant, and more preferably a cultivated plant.

A suitable aspect of the raw material for the biomass-derived softener is a vegetable oil obtained from a plant such as the cultivated plant described above. Examples of the suitable vegetable oil include lignin oil, sunflower oil, canola oil, rapeseed oil, corn oil, hemp seed oil, olive oil, linseed oil, soybean oil, palm oil, poppy seed oil, and jojoba oil.

Another preferred aspect of raw material for the biomass-derived softener is a raw material obtained from a plant such as the cultivated plant described above, including starch, cellulose, or lignin. In particular, the raw material includes a raw material obtained from sugar cane or sugar beet, a raw material obtained from palm oil, a raw material obtained from sunflower, and a raw material obtained from canola.

The method for producing the biomass-derived softener is not particularly limited as long as the plant or animal fat source is used as a raw material without impairing the object of the present invention. In an exemplary aspect of the present invention, the biomass-derived softener can be obtained by preparing an alcohol, such as a long-chain aliphatic alcohol, from the plant or animal fat source described above, and then modifying the alcohol.

The biomass-derived softener tends to contain more paraffinic carbon atoms than the fossil fuel-derived softener. The biomass-derived softener, on the other hand, tends to contain neither a naphthenic carbon atom nor an aromatic carbon atom or contain fewer naphthenic carbon atom and fewer aromatic carbon atom than the fossil fuel-derived softener.

The biomass-derived softener may contain a molecular structure derived from a plant classified into (α) to (γ) below, but it is desirable that the biomass-derived softener not contain such a molecular structure from the viewpoint of heat resistance:
(α) a softener containing a fatty acid ester represented by the following formula (α);
(β) a softener containing a triglyceride represented by the following formula (β); and
(γ) a softener containing a dimer acid ester, which is a dimer acid-based compound represented by the following formula (γ).

The biomass-derived softener (α) in the classification (α) is a softener containing a fatty acid ester represented by the following formula (α).

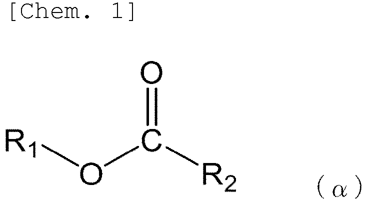

In the formula (α), R₁ is a substituted or unsubstituted aryl group having 1 to 22 carbon atoms, preferably 1 to 10 carbon atoms, more preferably a substituted or unsubstituted phenyl group; a substituted or unsubstituted, linear or branched alkyl group having 1 to 22 carbon atoms; or a substituted or unsubstituted, linear or branched alkylene group having 1 to 22 carbon atoms with 1 to 3 double bonds, preferably one double bond, and
R₂ is a substituted or unsubstituted, linear or branched, saturated or unsaturated aliphatic hydrocarbon group having 1 to 21 carbon atoms, preferably a linear, saturated or unsaturated aliphatic hydrocarbon group having 1 to 21 carbon atoms, more preferably a linear unsaturated aliphatic hydrocarbon group having 1 to 21 carbon atoms with 1 to 3 double bonds, and even more preferably a linear unsaturated aliphatic hydrocarbon group having 1 to 17 carbon atoms with one double bond.

When R₁ above is an alkyl group, it is preferably ethyl, propyl, butyl, pentyl, hexyl, heptyl, octyl, 2-ethylhexyl, nonyl, decyl, stearyl, or oleyl, and more preferably **2-**ethylhexyl, decyl, or oleyl.

When R₁ above is an alkylene group having one double bond, the double bond is desirably located at the 9-position of the alkylene group.

The number of carbon atoms in the groups R₁ and R₂ is the total number of carbon atoms including the number of carbon atoms in substituents and side chains, unless otherwise specified.

R₁ in the fatty acid ester represented by the formula (α) is preferably a substituted or unsubstituted, linear or branched alkyl group having 1 to 22 carbon atoms, more preferably ethyl, propyl, butyl, pentyl, hexyl, heptyl, octyl, 2-ethylhexyl, nonyl, decyl, stearyl, or oleyl, and even more preferably 2-ethylhexyl, oleyl, or decyl.

R₂ in the fatty acid ester represented by the formula (α) is preferably a substituted or unsubstituted, linear or branched, saturated or unsaturated aliphatic hydrocarbon group having 1 to 21 carbon atoms, more preferably a linear, saturated or unsaturated aliphatic hydrocarbon group having 1 to 21 carbon atoms, even more preferably a linear unsaturated aliphatic hydrocarbon group having 1 to 21 carbon atoms with 1 to 3 double bonds, and yet still more preferably a linear unsaturated aliphatic hydrocarbon group having 1 to 17 carbon atoms with one double bond.

Preferred examples of a fatty acid ester compound represented by the formula (α) include alkyl arachidonate, alkyl linoleate, alkyl linolenate, alkyl laurate, alkyl myristate, alkyl oleate, alkyl caprate, alkyl stearate, alkyl palmitate, alkyl caprylate, alkyl caproate, alkyl butanoate, and alkyl behenate.

Among these fatty acid esters, 2-ethylhexyl oleate, 2-ethylhexyl stearate, decyl oleate, decyl stearate, oleyl oleate, and oleyl stearate are preferred.

The above fatty acid esters may be used singly or as a mixture of two or more thereof.

The biomass-derived softener (β) in the classification (β) is a softener containing a triglyceride represented by the following formula (β). A triglyceride refers to an ester of glycerin in which all hydroxy groups of a fatty acid having three hydroxy groups are esterified.

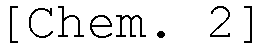

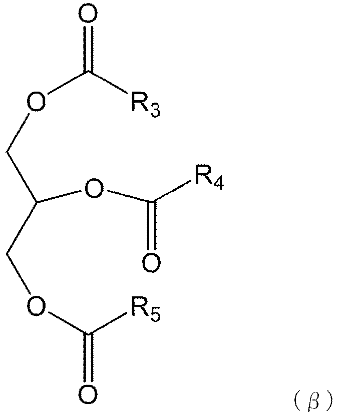

In the formula (β), R₃, R₄ and R₅ are each independently a substituted or unsubstituted, linear or branched alkyl group having 1 to 22 carbon atoms; or a substituted or unsubstituted, linear or branched alkylene group having 1 to 22 carbon atoms with 1 to 3 double bonds, preferably one double bond.

All of R₃, R₄ and R₅ in the triglyceride represented by the formula (β) are preferably the same. A preferred aspect of R₃, R₄ and R₅ in the triglyceride represented by formula (β) is oleyl, and another preferred aspect is an organic group having 17 carbon atoms represented by the following formula (β1).

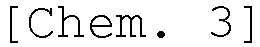

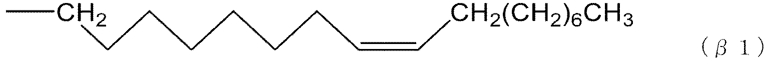

The biomass-derived softener (γ) in the classification (γ) is a softener containing a dimer acid ester, which is a dimer acid-based compound represented by the following formula (γ). Such a dimer acid ester is usually a reaction product of a dimer acid and a linear or branched saturated alcohol having 1 to 22 carbon atoms or a linear or branched unsaturated alcohol having 1 to 22 carbon atoms with 1 to 3 carbon-carbon double bonds.

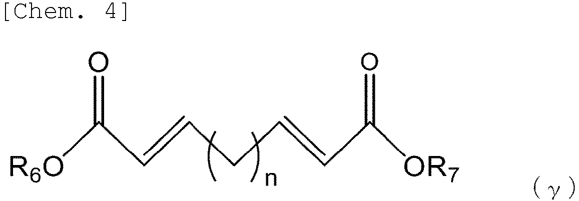

In the formula (γ), n is an integer of 1 or more, preferably an integer of 1 to 40, and more preferably an integer of 1 to 30; and R₆ and R₇ are each independently a substituted or unsubstituted, linear or branched alkyl group having 1 to 22 carbon atoms, preferably methyl, ethyl, propyl, butyl, pentyl, hexyl, heptyl, octyl, 2-ethylhexyl, nonyl, decyl, stearyl, or oleyl.

A dimer acid ester is an ester of an unsaturated fatty acid dimer. A dimer fatty acid is obtained by dimerization of each fatty acid. The ester is obtained by reacting the dimer acid with an alcohol. The alcohol used as a raw material for the dimer acid ester is preferably methanol, 2-ethylhexyl alcohol, tridecyl alcohol, or oleyl alcohol.

In the case of using the biomass-derived softeners (α) to (γ), the biomass-derived softeners may be used singly as the softener or as a mixture of two or more thereof as the softener.

The content of the softener (C) is 10 to 200 parts by mass, preferably 20 to 180 parts by mass, more preferably 25 to 160 parts by mass, and even more preferably 30 to 150 parts by mass, per 100 parts by mass of the ethylene·α-olefin nonconjugated polyene copolymer (A), from the viewpoint of ensuring good fogging resistance, flexibility, and processability while suppressing bleeding of the softener.

### <Propylene-ethylene copolymer (D)>

The thermoplastic elastomer composition of the present invention may further contain a propylene-ethylene copolymer (D) (hereinafter, sometimes referred to as "component (D)") in addition to the ethylene·α-olefin nonconjugated polyene copolymer (A), the polypropylene-based resin (B), and the softener (C).

The propylene-ethylene copolymer (D) that can be used in the present invention has a melting point of 70°C or lower or has no melting point observed, and has a density of 800 to 900 kg/m³.

The propylene-ethylene copolymer (D) used in the present invention is preferably a random copolymer of propylene and ethylene.

The propylene-ethylene copolymer (D) preferably satisfies the following (1) and (2):
(1) containing 70 mol% or more and less than 90 mol%, preferably 75 to 88 mol%, of the unit derived from propylene, and more than 10 mol% and 30 mol% or less, preferably 12 mol% or more to 25 mol% [propylene content + α-olefin content = 100 mol%], of the unit derived from an α-olefin including ethylene; and
(2) having a melting point (Tm) of 70°C or lower, preferably 60°C or lower.

The propylene-ethylene copolymer (D) used in the present invention usually has substantially no unsaturated bond in its main chain.

The phrase "having no melting point observed" means that the propylene-ethylene copolymer (D) used in the present invention includes a so-called amorphous copolymer having no melting point (Tm), and specifically also includes a copolymer having no melting peak observed for which the heat of fusion (ΔH) is 10 J/g or more, for example, in the measurement of the melting point (Tm) using DSC described later within a temperature range of -100 to 200°C measured by DSC.

The propylene-ethylene copolymer (D) used in the present invention usually has a melt flow rate (MFR; measured at 230°C under a load of 2.16 kg) of in the range of 0.05 to 100 g/10 min, preferably 0.1 to 50 g/10 min.

The thermoplastic elastomer composition of the present invention may or may not contain the propylene-ethylene copolymer (D). When the thermoplastic elastomer composition of the present invention further contains the propylene-ethylene copolymer (D), the content of the propylene-ethylene copolymer (D) is more than 0 parts by mass and 40 parts by mass or less, preferably more than 0 parts by mass and 35 parts by mass or less, more preferably more than 0 parts by mass and 30 parts by mass or less, and even more preferably more than 0 parts by mass and 25 parts by mass or less, per 100 parts by mass of the ethylene·α-olefin nonconjugated polyene copolymer (A).

### <Configuration of thermoplastic elastomer composition>

The thermoplastic elastomer composition of the present invention contains the ethylene/α-olefin nonconjugated polyene copolymer (A), the polypropylene-based resin (B), the softener (C), and the optional propylene-ethylene copolymer (D), and at least a portion of the composition is cross-linked.

The thermoplastic elastomer composition of the present invention preferably satisfies the following requirement (1), and more preferably satisfies the following requirements (1) and (2):
(1) having a melt flow rate (MFR; 230°C, 10 kg load) measured according to JIS K 7210 of 1 to 150 g/10 min; and
(2) having a Shore A hardness (instantaneous value) measured according to JIS K 6253 with three 2-mm thick press sheets stacked on top of each other to a thickness of 6 mm being 50 to 100.

The melt flow rate specified in the requirement (1) is preferably 1 to 50 g/10 min, more preferably 1 to 30 g/10 min, even more preferably 1 to 20 g/10 min, and particularly preferably 5 to 20 g/10 min.

The Shore A hardness (instantaneous value) specified in the requirement (2) is preferably 40 to 100, more preferably 45 to 97, and even more preferably 50 to 95. Here, the Shore A hardness (instantaneous value) can be measured by a method as described in Examples below.

The thermoplastic elastomer composition of the present invention may consists of the ethylene/α-olefin nonconjugated polyene copolymer (A), the polypropylene-based resin (B), and the softener (C) as long as at least a portion of the composition is cross-linked. Alternatively, the thermoplastic elastomer composition may consists of the ethylene·α-olefin nonconjugated polyene copolymer (A), the polypropylene-based resin (B), the softener (C), and the propylene-ethylene copolymer (D). In addition to the ethylene·α-olefin nonconjugated polyene copolymer (A), the polypropylene-based resin (B), the softener (C), and the optional propylene-ethylene copolymer (D), the thermoplastic elastomer composition of the present invention may also contain additional components (hereinafter referred to as "other components") that do not correspond to the components (A) to (D).

Here, the cross-linking of the thermoplastic elastomer composition of the present invention is usually carries out in the presence of a crosslinking agent. In one preferred aspect of the thermoplastic elastomer composition of the present invention, therefore, the thermoplastic elastomer composition of the present invention further contains a crosslinking agent described later. In this case, the thermoplastic elastomer composition of the present invention may further contain a crosslinking auxiliary agent described later.

### Crosslinking agent

The thermoplastic elastomer composition of the present invention may further contain a crosslinking agent as described above. Examples of the crosslinking agent include crosslinking agents generally used, such as organic peroxides, phenol resins, sulfur, hydrosilicone-based compounds, amino resins, quinones or derivatives thereof, amine-based compounds, azo-based compounds, epoxy-based compounds, isocyanate-based compounds, and thermosetting elastomers. In the present invention, among these, the crosslinking agent is preferably an organic peroxide.

Specific examples of the organic peroxide include dicumyl peroxide, di-tert-butylperoxide, 2,5-dimethyl-2,5-di-(tert-butylperoxy)hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane, N-butyl-4,4-bis(tert-butylperoxy) valerate, benzoyl peroxide, p-chlorobenzoyl peroxide, 2,4-dichlorobenzoyl peroxide, tert-butylperoxybenzoate, tert-butylperbenzoate, tert-butylperoxyisopropylcarbonate, diacetyl peroxide, lauroyl peroxide, and tert-butyl cumyl peroxide. In one preferred aspect of the present invention, the crosslinking agent is 2,5-dimethyl-2,5-di-(tert-butylperoxy)hexyne-3.

The crosslinking agent such as an organic peroxide can be used in an amount of 0.05 to 3 parts by mass, preferably 0.10 to 1 part by mass per 100 parts by mass of ethylene·α-olefin nonconjugated polyene copolymer (A). When the amount of the crosslinking agent added, particularly the amount of the organic peroxide added, is within the above range, the resulting thermoplastic elastomer composition tends to have sufficient heat resistance, tensile properties, and rubber elasticity while also having a certain level or higher of moldability. When the amount of the crosslinking agent added, particularly the amount of the organic peroxide added, is less than the above range, the resulting thermoplastic elastomer composition has insufficient heat resistance, tensile properties, and rubber elasticity due to the low degree of crosslinking. When the amount added is larger than the above range, the resulting thermoplastic elastomer composition may have an excessively high degree of crosslinking, resulting in decreased moldability.

The crosslinking agent such as an organic peroxide is more preferably used in an amount of 0.10 to 0.30 parts by mass, which is even smaller than the above amount, per 100 parts by mass of the ethylene·α-olefin nonconjugated polyene copolymer (A) from the standpoint of obtaining a good appearance of an extruded sheet.

### Crosslinking auxiliary agent

In the present invention, a crosslinking auxiliary agent may be blended during the crosslinking treatment using the organic peroxide. In other words, when the thermoplastic elastomer composition of the present invention contains the organic peroxide as the crosslinking agent, the thermoplastic elastomer composition may further contain a crosslinking auxiliary agent. Examples of the crosslinking auxiliary agent include crosslinking auxiliary agents that are commonly used in crosslinking treatment with an organic peroxide, such as sulfur, p-quinonedioxime, p,p'-dibenzoyl quinonedioxime, N-methyl-N-4-dinitrosoaniline, nitrosobenzene, diphenylguanidine, and trimethylolpropane-N,N'-m-phenylenedimaleimide; multifunctional vinyl monomers, such as divinylbenzene, triallyl cyanurate, multifunctional methacrylate monomers such as ethylene glycol dimethacrylate, diethylene glycol dimethacrylate, polyethylene glycol dimethacrylate, trimethylolpropane trimethacrylate and allyl methacrylate, a vinyl butyrate, and vinyl stearate.

A uniform and mild crosslinking reaction can be expected using such a compound. In particular, divinylbenzene is the most preferred in the present invention. Since divinylbenzene is easy to handle, has good compatibility with the ethylene·α-olefin nonconjugated polyene copolymer and the polypropylene-based resin, which are the main components of the above crosslinked material, has the ability to solubilize an organic peroxide, and acts as a dispersant for an organic peroxide, a thermoplastic elastomer composition with a homogeneous crosslinking effect upon heat treatment and a good balance between flowability and physical properties can be obtained.

The crosslinking auxiliary agent described above can be used in an amount of usually 5 parts by mass or less, preferably 0.05 to 3 parts by mass, per 100 parts by mass of the ethylene·α-olefin nonconjugated polyene copolymer (A).

In addition, a decomposition accelerator including a tertiary amine, such as triethylamine, tributylamine and 2,4,6-tri(dimethylamino)phenol, and a naphthenate of aluminum, cobalt, vanadium, copper, calcium, zirconium, manganese, magnesium, lead or mercury may be used to accelerate the decomposition of the organic peroxide.

In addition to the ethylene·α-olefin nonconjugated polyene copolymer (A), the thermoplastic elastomer composition of the present invention may further contain, as "other components", another rubber (hereinafter referred to as "other rubber") that does not correspond to the ethylene·α-olefin nonconjugated polyene copolymer (A), the polypropylene-based resin (B), or the propylene-ethylene copolymer (D). In this case, the added amount of "other rubber" that can be used in the present invention is preferably 50 parts by mass or less per 100 parts by mass of the ethylene·α-olefin nonconjugated polyene copolymer (A).

Examples of the other rubber that can be used include diene rubber such as styrene butadiene rubber (SBR), acrylonitrile butadiene rubber (NBR), natural rubber (NR) and butyl rubber (IIR), SEBS, and polyisobutylene.

The thermoplastic elastomer composition of the present invention may contain, as the "other components", additives such as a heat stabilizer, an antistatic agent, a weathering stabilizer, an anti-aging agent, a filler, a colorant, and a lubricant, in addition to the crosslinking agent, the crosslinking auxiliary agent, and the "other rubber" as long as the object of the present invention is not impaired.

In one preferred embodiment, 30 parts by mass or less of components other than the ethylene·α-olefin nonconjugated polyene copolymer (A), the polypropylene-based resin (B), the softener (C), and the optional propylene-ethylene copolymer (D) (i.e., the "other components") are blended per 100 parts by mass of the elastomer composition of the present invention, but the present invention is not limited thereto.

### <Method for producing thermoplastic elastomer composition>

The thermoplastic elastomer composition of the present invention can be obtained by cross-linking a mixture containing the ethylene·α-olefin nonconjugated polyene copolymer (A), the polypropylene-based resin (B), and the softener (C). Here, the cross-linking can be performed by a known dynamic cross-linking method. The dynamic cross-linking method refers to performing a dynamic heat treatment in the presence of a crosslinking agent, and the expression "dynamic heat treatment" refers to kneading in a molten state. By performing a dynamic heat treatment in the presence of a crosslinking agent, a crosslinked thermoplastic elastomer composition can be obtained, typically by dynamically cross-linking the mixture in the presence of the crosslinking agent (i.e., in such a manner that the mixture is kneaded in a molten state in the presence of the crosslinking agent, and the ethylene·α-olefin nonconjugated polyene copolymer (A) is partially cross-linked in a state where a shear force is applied to the mixture). Here, the crosslinking agent may be blended into the mixture containing the ethylene·α-olefin nonconjugated polyene copolymer (A) and the polypropylene-based resin (B) in the form of a crosslinking agent mixture containing the crosslinking agent and the softener (C), which is obtained by diluting the crosslinking agent with the softener (C). The crosslinking agent mixture may further contain the crosslinking auxiliary agent. When the organic peroxide is used as the crosslinking agent, the crosslinking agent mixture may further contain the organic peroxide.

When the cross-linking is performed in the presence of a crosslinking agent, the order of mixing the ethylene·α-olefin nonconjugated polyene copolymer (A), the polypropylene-based resin (B), the softener (C), the crosslinking agent, and a crosslinking auxiliary agent added as necessary is not particularly limited, but for example, the ethylene·α-olefin nonconjugated polyene copolymer (A), the polypropylene-based resin (B), and the crosslinking agent mixture may be mixed first, and then the softener (C) may be further blended.

Also, in the case of obtaining a thermoplastic elastomer composition further containing the optional propylene-ethylene copolymer (D), a mixture containing the ethylene·α-olefin nonconjugated polyene copolymer (A), the polypropylene-based resin (B), the softener (C), and the propylene-ethylene copolymer (D) can be obtained by the same method. Such a mixture can be obtained, for example, by adding the crosslinking agent or a crosslinking agent mixture containing the crosslinking agent and the softener (C) to a mixture containing the ethylene·α-olefin nonconjugated polyene copolymer (A), the polypropylene-based resin (B), and the propylene-ethylene copolymer (D). In this case, the softener (C) may be further added to the obtained mixture after the step of adding the crosslinking agent mixture.

The dynamic heat treatment in the present invention is preferably performed in a non-open apparatus and in an inert gas atmosphere such as nitrogen or carbon dioxide. The temperature of the heat treatment ranges from the melting point of the polypropylene-based resin (B) to 300°C, and is usually 150 to 290°C, and preferably 170°C to 270°C. The kneading time is usually 1 to 20 minutes, and preferably 1 to 10 minutes. The shear force to be applied, in terms of the shear velocity, is in the range of 10 to 10,000 sec⁻¹ and preferably of 100 to 5,000 sec⁻¹.

As the kneading device, for example, a mixing roll, an intensive mixer (e.g., a Banbury mixer or a kneader), and a single- or twin-screw extruder can be used, and a non-open-type device is preferred. Among them, a twin-screw extruder is particularly preferred.

The thermoplastic elastomer of the present invention is desirably subjected to static heat treatment in hot air after the dynamic heat treatment described above. The heat treatment is preferably performed at 80 to 130°C for about 1 to 10 hours. This heat treatment allows removal of a residue of the crosslinking agent, thereby reducing the odor of the resulting product or producing a product having good fogging properties.

### [Molded body]

The molded body obtained in the present invention comprises the thermoplastic elastomer composition of the present invention described above. The molded body can be formed into a film or a sheet. Examples of the use of the molded body include automobile interior materials. The molded body can be suitably used, for example, as a top surface layer of an automobile interior material.

Such a molded body of the present invention can be obtained by molding the thermoplastic elastomer composition by various molding methods. Examples of the molding methods include injection molding, extrusion, vacuum forming, pressure forming, blow molding, calendering, and foam molding. The thermoplastic elastomer composition of the present invention contains the ethylene·α-olefin nonconjugated polyene copolymer (A), the polypropylene-based resin (B), and the softener (C), and thus has excellent high-temperature flowability and extrudability, whereby the composition can be molded using molding apparatus conventionally used in, for example, compression molding, transfer molding, injection molding, and extrusion.

For example, in the case of producing an automobile interior material from the thermoplastic elastomer composition, the interior material can be produced by the following conventional methods.

(1) The composition is fed into a plastic processing machine such as an extruder with a T-die or a calendering machine, and formed into a desired shape such as a sheet.
(2) The composition is molded into the desired shape by injection molding.

The top surface layer of the automobile interior material of the present invention can be provided with a surface layer containing at least one polymer selected from the group consisting of polyurethane, saturated polyester, acrylic ester resin, polyvinyl chloride, and isocyanate resin.

Examples of the saturated polyester used to form such a surface layer include polyethylene terephthalate, polybutylene terephthalate, and a derivative thereof. The acrylic ester resin used is, for example, polymethyl (meth)acrylate, polyisobutyl (meth)acrylate, or poly 2-ethylhexyl (meth)acrylate. Furthermore, the isocyanate resin used is, for example, polyhexamethylene diisocyanate or polyisophorone diisocyanate.

Such a surface layer is preferably 300 µm or less. A primer layer may be interposed between the top surface layer and such a surface layer.

Furthermore, the automobile interior material of the present invention can form a laminate with a polyolefin foam or a laminate with a polyolefin resin. Examples of the polyolefin used here include polyethylene and polypropylene. Examples of the polypropylene include the polypropylene-based resins used in the production of the thermoplastic elastomer composition of the present invention.

Such a laminate is produced, for example, by extruding the thermoplastic elastomer composition with an extruder with a T-die, and passing the sheet-shaped thermoplastic elastomer composition extruded in a molten state between a pair of rolls in a state of being laminated with a polyolefin foam sheet, or by sequential injection molding of a polyolefin resin and a thermoplastic elastomer.

The automobile interior material of the present invention is mainly used as a top surface layer of, for example, a door trim, an instrumental panel, a ceiling, a steering wheel, a console box, or a seat.

### Examples

Hereinafter, the present invention will be described in detail with reference to Examples, but the present invention is not limited to these Examples. In Examples, various physical properties were measured as described below.

### [Measurement method]

### (1) Melt flow rate (MFR)

Melt flow rates of the thermoplastic elastomer compositions obtained in Examples and Comparative Examples were measured at 230°C, under a load of 10 kg according to JIS K 7210.

### (2) Production of press sheet

Pellets of the thermoplastic elastomer compositions obtained in Examples and Comparative Examples were pressed using a heat press molding machine (press temperature: 190°C, cooling temperature: 20°C, preheating time: 6 minutes, and pressure melting time: 4 minutes). As a result of the press processing, a flat press sheet of 20 cm long × 20 cm wide × 2 mm thick was obtained for each composition.

### (3) Shore A hardness

Using the 2-mm thick press sheet produced by the method described in the section of "(2) Production of press sheet" above, the Shore A hardness (instantaneous value) (hereinafter referred to as "A hardness") was determined with a durometer according to JIS K 6253. Here, the measurement of the Shore A hardness (instantaneous value) was performed on a test piece formed by stacking three 2-mm thick press sheets prepared in the section of (2).

### (4) Tensile properties (tensile test)

Using the 2-mm thick press sheet produced by the method described in the section of "(2) Production of press sheet" above, the following items were measured according to the method of JIS K 6301.

M100: stress at 100% elongation
TB: tensile strength
EB: tensile elongation at break

### (5) Fogging property

### (a) Thermoplastic elastomer composition

According to DIN 75201, 10 g of pellets of the thermoplastic elastomer compositions obtained in Examples and Comparative Examples were tested at "100°C × 5 hours" to measure the fogging degree (haze and gloss, %) of glass.

### (b) Softener

The fogging properties of softeners were measured by testing according to VDA278, integrating the peaks detected higher than the baseline to calculate the FOG value (µg/g).

### (6) Heating evaporation loss

### (a) Thermoplastic elastomer composition

The press sheet having a thickness of 2 mm produced by the method described above in the section of "(2) Production of press sheet" was cut into a size of 60 × 40 mm, and the weight (mass) before heating (W0) was measured. Thereafter, this sheet was heated using an oven (Geer's Aging Oven: AG-1115, manufactured by Ueshima Seisakusho Co., Ltd.), and the weight (mass) (W1) after being allowed to cool for 1 hour at room temperature was measured. The difference (WO - W1) between the weight (mass) before heating (W0) and the weight (mass) after heating (W1) was calculated, and the percentage of the difference (WO - W1) with respect to the weight (mass) before heating (W0) was defined as the heating evaporation loss.

The heating was performed under three conditions of "100°C × 100 hours, in air", "100°C × 200 hours, in air", and "100°C × 300 hours, in air" to determine the heating evaporation loss under each condition.

### (b) Softener

The sample softeners were weighed to measure the weight (mass) before heating (W0). Thereafter, the softener was heated in an oven (Geer Oven: ACR-60, manufactured by Toyo Seiki Seisaku-sho, Ltd.), and the weight (mass) (W1) after being allowed to cool for 1 hour at room temperature was measured. The difference (WO - W1) between the weight (mass) before heating (W0) and the weight after heating (W1) was calculated, and the percentage of the difference (WO - W1) with respect to the weight (mass) before heating (W0) was defined as the heating evaporation loss.

The heating was performed under three conditions of "200°C × 1 hour, in air", "200°C × 3 hours, in air", and "200°C × 5 hours, in air" to determine the heating evaporation loss under each condition.

### (7) Physical properties of ethylene·α-olefin nonconjugated polyene copolymer (A)

### (7-1) Composition (content of each constituent unit)

The mass fraction (% by mass) of each constituent unit of the ethylene·α-olefin nonconjugated polyene copolymer (A) was determined from a measurement value by ¹³C-NMR. The measured value was obtained by measuring the ¹³C-NMR spectrum of the copolymer by using a nuclear magnetic resonance apparatus, Model ECX400P (manufactured by JEOL Ltd.) at a measurement temperature: 120°C in a measuring solvent: orthodicholorbenzene/deuterated benzene = 4/1 with a number of scans: 8000.

### (7-2) Iodine value

The iodine values for the ethylene·α-olefin nonconjugated polyene copolymer (A) were determined by a titration method. Specifically, the measurement was performed by the following method.

In 60 ml of carbon tetrachloride, 0.5 g of the copolymer was dissolved, to which a small amount of Wijs reagent and a 20% potassium iodide solution were added, followed by titration with a 0.1 mol/L sodium thiosulfate solution. A starch indicator was added at around the endpoint, followed by well stirring and titration until the light purple color disappeared, and a g of iodine was calculated as an amount of halogen consumed relative to 100 g of the sample.

### (7-3) Mooney viscosity

The Mooney viscosity ML₁₊₄ (125°C) of the ethylene·α-olefin nonconjugated polyene copolymer (A) was measured at 125°C according to the measurement method of ASTM D 1646-19a.

### (8) Physical properties of softener

### (8-1) Kinematic viscosity

The kinematic viscosity of the softener was measured at 40°C and at 100°C according to the measurement method of ASTM D 445.

### (8-2) Density

The density of the softener was measured at 15°C according to the measurement method of ASTM D 4052.

### (8-3) Pour point

The pour point of the softener was measured according to ASTM D-6749.

### (8-4) Hydrocarbon structure

The naphthenic carbon atom content (% C_{N}) (proportion of naphthenic carbon atoms), paraffinic carbon atom content (% C_{P}) (paraffinic carbon atom content), and aromatic carbon atom content (% C_{A}) (proportion of aromatic carbon atoms) of the softener were determined according to ASTM D2140.

In Examples and Comparative Examples below, while the proportion of naphthenic carbon atoms, the paraffinic carbon atom content, and the proportion of aromatic carbon atoms were measured according to ASTM D2140, they might be measured according to ASTM D3238-85 instead.

### (8-5) Molecular weight distribution

The softener was subjected to gel permeation chromatography (GPC) measurement under the following conditions to determine the relative molecular weight (molecular weight in terms of polystyrene) and its weight fraction (dW/dlogM) at each elution time. A molecular weight distribution curve was then prepared to determine the weight-average molecular weight Mw, number-average molecular weight Mn, and Mw / Mn in terms of polystyrene.

### Measurement model: (Gel permeation chromatograph HLC-8321 GPC), manufactured by Tosoh Corporation

Column: (2 × TSKgel GMH6-HT + 2 × TSKgel GMH6-HTL (both 7.5 mm I.D. × 30 cm, manufactured by Tosoh Corporation))
Solvent: o-dichlorobenzene; ODCB (containing 0.025% BHT)
Column temperature: 140°C
Concentration: 0.1%
Flow rate: 1.0 mL/minute
Detector: Differential refractometer (RI)
Column calibration: monodisperse polystyrene (manufactured by Tosoh Corporation); #3 std set
Molecular weight conversion: polystyrene conversion/standard conversion method

### [Raw material]

Raw materials used in Examples and Comparative Examples are as follows.

### <(A) Ethylene·α-olefin nonconjugated polyene copolymer>

As the ethylene·α-olefin nonconjugated polyene copolymer (A) (component (A)), an ethylene-propylene ENB copolymer (A-1) was prepared according to Production Example 1 below.

### [Production Example 1]

A ternary copolymer composed of ethylene, propylene, and 5-ethylidene-2-norbornene (ENB) was continuously synthesized at a temperature of 60°C using a 300-liter polymerization reactor with a stirring blade.

At this time, hexane (feed rate: 26.5 kg/h) was used as a polymerization solvent, and ethylene, propylene, ENB, and hydrogen were continuously fed into the polymerization reactor at feed rate of 4.6 kg/h, 3.0 kg/h, 420 g/h, and 2 normal liters per hour, respectively. While maintaining the polymerization pressure at 1.6 MPa-G, a compound (t-butylamido)-dimethyl(η₅-2-methyl-s-indacen-1-yl)silane titanium(II) 1,3-pentadiene represented by the following formula: 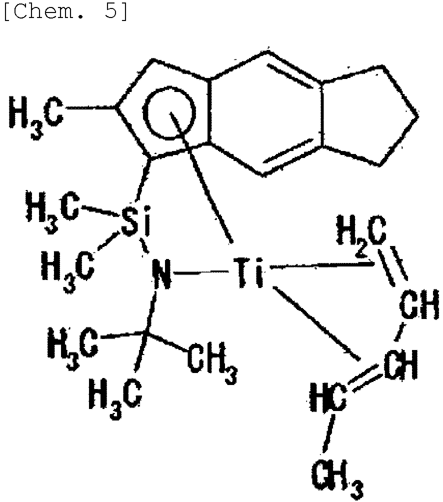 was continuously fed into the polymerization reactor as a main catalyst so that the feed rate might be 0.003 mmol/h. Then, (C₆H₅)₃CB(C₆F₅)₄ as a cocatalyst and triisobuthylaluminum as an organoaluminum compound were continuously fed into the polymerization reactor at 0.017 mmol/h and 10 mmol/h, respectively.

In this way, a polymerization solution containing 17.2% by weight of ethylene-propylene ENB copolymer (A-1) was obtained (polymerization time: 2.12 hours). The obtained polymerization solution was added to a large volume of methanol to allow the copolymer (A-1) to precipitate, and the resulting precipitate was then dried under reduced pressure at 80°C for 24 hours to isolate the copolymer (A-1).

Physical properties of the resulting copolymer (A-1) (hereinafter referred to as "A-1") are shown below.

### (Physical properties of A-1)

Content of ethylene unit: 66% by mass
Iodine value: 9.8
Mooney viscosity ML₁₊₄ (125°C): 61

### [Production Example 2]

A copolymer (A-2) composed of ethylene, propylene, and ENB was obtained by the same treatment as in Production Example 1, except that the monomer feed rate was adjusted and oil extension was further carried out.

Physical properties of the obtained copolymer (A-2) (hereinafter referred to as "A-2") are shown below.

### (Physical properties of A-2)

Content of ethylene unit: 64% by mass
Iodine value: 11.5
Mooney viscosity ML₁₊₄ (125°C): 51
Amount of oil extension: 40 parts by mass of rubber softener (C'-1) (manufactured by Idemitsu Kosan Co., Ltd., trade name "Diana Process Oil PW-100") per 100 parts by mass of rubber

### <(B) Polypropylene-based resin>

As the polypropylene-based resin (B) (component (B)), the following propylene-ethylene block copolymer (B-1) (hereinafter referred to as "B-1") was used.

### (B-1) Propylene-ethylene block copolymer (trade name "PPC 9760" manufactured by Total Atofina, MFR (ISO 1133; 230°C, 2.16 kg load) = 25 g/10 min, melting point (ISO 3146) = 165°C)

### <(C) Softener and other softeners>

A softener (C-1) (trade name "VIVA-B-FIX10227" manufactured by Hansen & Rosenthal) (hereinafter referred to as "C-1") having physical properties shown in Table 1 was used as the softener (C) (component (C)).

The following softeners (C'-1), (C'-2), and (C'-3) having physical properties shown in Table 1 below were used as other softeners not corresponding to the softener (C):
softener (C'-1) (trade name "Diana Process Oil PW-100" manufactured by Idemitsu Kosan Co., Ltd.) (hereinafter referred to as "C'-1");
softener (C'-2) (trade name "PIONIER 2071P" manufactured by Hansen & Rosenthal) (hereinafter referred to as "C'-2"); and
softener (C'-3) (trade name "PIONIER 2275" manufactured by Hansen & Rosenthal China) (hereinafter referred to as "C'-3").

### [Table 1]

**[Table 1]**

| Item | Condition | Unit | C'-1 | C'-2 | C'-3 | C-1 |
|---|---|---|---|---|---|---|
| Kinematic viscosity | ASTM D 445 @40°C | mm²/sec | 101 | 72 | 387 | 58 |
| | ASTM D 445 @100°C | mm²/sec | 11.7 | 9.3 | 26.5 | 9.5 |
| Density | ASTM D 4052 @15°C | kg/m³ | 870 | 867 | 881 | 834 |
| Heating evaporation loss | 200°C×1hr | % | 0.38 | - | 0.14 | 0.10 |
| | 200°C×3hr | % | 2.22 | - | 0.72 | 0.68 |
| | 200°C×5hr | % | 2.72 | - | 1.35 | 1.37 |
| Pour point ASTM D-6749 | | °C | -15 | -15 | -18 | -24 |
| ASTM D-2140 | Paraffinic carbon atom | % | 70 | 67 | 69 | 100 |
| | Naphthenic carbon atom | % | 30 | 33 | 31 | 0 |
| | Aromatic carbon atom | % | 0 | 0 | 0 | 0 |
| GPC (polystyrene conversion) | Mw | - | 808 | 682 | 1180 | 1100 |
| | Mn | - | 719 | 608 | 955 | 1020 |
| | Mw/Mn | - | 1.12 | 1.12 | 1.24 | 1.08 |
| Fogging property | FOG value | µg/g | 2741 | 1859 | 616 | 42 |

### <(D) Propylene-ethylene copolymer>

As the propylene-ethylene copolymer (D) (component (D)), the following propylene-ethylene copolymer (D-1) (hereinafter referred to as "D-1") was used.

### (D-1) Propylene-ethylene copolymer (trade name: VERSIFY^{™} 2400.05, manufactured by The Dow Chemical Company, melt flow rate (230°C, 2.16 kg load); 2 g/10 min, density 863 kg/m³)

### <Crosslinking agent and crosslinking auxiliary agent>

Crosslinking agent: organic peroxide (2,5-dimethyl-2,5-di(tert-butylperoxy)hexyne-3, trade name: PERHEXYNE 25B, manufactured by NOF Corporation)
Crosslinking auxiliary agent: divinylbenzene (trade name: DVB-810, manufactured by NIPPON STEEL Chemical & Material Co., Ltd)

The crosslinking agent and the crosslinking auxiliary agent were used in the form of a crosslinking agent mixture obtained by mixing 100 parts by mass of a crosslinking auxiliary agent and 100 parts by mass of a softener per 100 parts by mass of the crosslinking agent. As the softener to be blended during mixing, the softener (C-1) or the softener(C'-1) described in the section of "(C) Softener and other softeners" above was used.

### [Example 1]

The following components were thoroughly mixed with a Henschel mixer:
100 parts by mass of the ethylene·α-olefin nonconjugated polyene copolymer (A-1);
100 parts by mass of the polypropylene-based resin (B-1); and
a crosslinking agent mixture composed of 0.28 parts by mass of an organic peroxide (trade name: PERHEXYNE 25B, manufactured by NOF Corporation) as a crosslinking agent, 0.28 parts by mass of divinylbenzene as a crosslinking auxiliary agent, and 0.28 parts by mass of the softener (C-1).

The mixture was granulated in a twin-screw extruder (model: KTX-46, manufactured by Kobe Steel, Ltd., cylinder temperatures: C1 = 110°C, C2 = 120°C, C3 = 140°C, C4 = 140°C, C5 = 150°C, C6 = 160°C, C7 to C8 = 180°C, and C9 to C14 = 230°C, die temperature: 200°C) while injecting the softener (C-1) into a cylinder, thereby giving pellets of the thermoplastic elastomer composition.

Various physical properties of the obtained pellets were measured according to the method described in the section of "Measurement method" above.

The results of physical properties are shown in Table 2 below.

### [Comparative Examples 1 to 3]

Pellets of a thermoplastic elastomer composition were produced in the same manner as in Example 1, except that the raw materials used and the blending amounts were changed as listed in Table 2 below.

Various physical properties of the obtained pellets were measured according to the method described in the section of "Measurement method" above.

The results of physical properties are shown in Table 2 below.

### [Table 2]

**[Table 2]**

| | | | | | Example 1 | Comparative Example 1 | Comparative Example 2 | Comparative Example 3 |
|---|---|---|---|---|---|---|---|---|
| | Component (A) | | A-1 | parts by mass | 100 | 100 | 100 | 100 |
| | Component (B) | | B-1 | parts by mass | 100 | 100 | 100 | 100 |
| | Component (C) | | C-1 | parts by mass | 40 | | | |
| | Other softeners | | C'-1 | parts by mass | | 40 | | |
| | | | C'-2 | parts by mass | | | 40 | |
| | | | C'-3 | parts by mass | | | | 40 |
| | Crosslinking agent mixture | Crosslinking agent | PERHEXYNE 25B | parts by mass | 0.28 | 0.28 | 0.28 | 0.28 |
| Formulation | | Crosslinking auxiliary agent | Divinylbenzene | parts by mass | 0.28 | 0.28 | 0.28 | 0.28 |
| | | Softeners | C-1 | parts by mass | 0.28 | | | |
| | | | C'-1 | parts by mass | | 0.28 | | |
| | | | C'-2 | parts by mass | | | 0.28 | |
| | | | C'-3 | parts by mass | | | | 0.28 |
| | | Subtotal | | parts by mass | 0.84 | 0.84 | 0.84 | 0.84 |
| | Total | | | parts by mass | 240.84 | 240.84 | 240.84 | 240.84 |
| Physical properties | MFR | | 230°C, 10 kgf | g/10min | 8.0 | 6.7 | 5.4 | 9.6 |
| | A Hardness | | Instantaneous value | - | 86 | 87 | 87 | 89 |
| | Tensile test | | M100 | MPa | 4.4 | 4.4 | 4.5 | 4.9 |
| | | | TB | MPa | 8.8 | 8.6 | 9.2 | 9.9 |
| | | | EB | % | 560 | 570 | 610 | 610 |
| Evaluation | Fogging (100°C×5hr) | | Haze | % | 0.2 | 2.0 | 4.3 | 0.4 |
| | | | Gloss | % | 99.2 | 89.2 | 70.6 | 98.3 |
| | Heating evaporation loss | | 100°C×100hr | % | 0.04 | 0.16 | 0.31 | 0.11 |
| | | | 100°C×200hr | % | 0.06 | 0.22 | 0.47 | 0.14 |
| | | | 100°C×300hr | % | 0.08 | 0.30 | 0.61 | 0.17 |

### [Example 2 and Comparative Examples 4 and 5]

Pellets of a thermoplastic elastomer composition were produced in the same manner as in Example 1, except that the raw materials used and the blending amounts were changed as listed in Table 3 below. Regarding the blending amount of the copolymer (A-2) in Table 3, the value shown in the upper row represents the total amount of oil extended rubber, and the value shown in italics in parentheses in the lower row represents the amount of the copolymer component (i.e., an amount remaining after subtracting the amount of oil contained in the oil extended rubber from the total amount of the oil extended rubber).

### [Table 3]

**[Table 3]**

| | | | | | Example 2 | Comparative Example 4 | Comparative Example 5 |
|---|---|---|---|---|---|---|---|
| | Component (A) | | A-1 | parts by mass | 47.0 | 47.0 | 47.0 |
| | | | A-2 | parts by mass | 74.2 *(53.0)* | 74.2 *(53.0)* | 74.2 *(53.0)* |
| | Component (B) | | B-1 | parts by mass | 30.0 | 30.0 | 100.0 |
| | Component (C) | | C-1 | parts by mass | 70.0 | | |
| | Other softeners | | C'-1 | parts by mass | | 70.0 | |
| | | | C'-3 | parts by mass | | | 70.0 |
| | Component (D) | | D-1 | parts by mass | 20.0 | 20.0 | 20.0 |
| Formulation | Crosslinking agent mixture | Crosslinking agent | PERHEXYNE 25B | parts by mass | 0.33 | 0.33 | 0.33 |
| | | Crosslinking auxiliary agent | Divinylbenzene | parts by mass | 0.33 | 0.33 | 0.33 |
| | | Softeners | C-1 | parts by mass | 0.33 | | |
| | | | C'-1 | parts by mass | | 0.33 | |
| | | | C'-3 | parts by mass | | | 0.33 |
| | | Subtotal | | parts by mass | 0.99 | 0.99 | 0.99 |
| | Total | | | parts by mass | 242.19 | 120.99 | 190.99 |
| Physical properties | MFR | | 230°C, 10 kgf | g/10min | 11.7 | 8.3 | 9.3 |
| | A Hardness | | Instantaneous value | - | 54 | 54 | 58 |
| | Tensile test | | M100 | MPa | 1.3 | 1.3 | 1.4 |
| | | | TB | MPa | 4.2 | 3.8 | 4.5 |
| | | | EB | % | 600 | 510 | 600 |
| Evaluation | Fogging (100°C×5hr) | | Haze | % | 0.3 | 2.4 | 1.0 |
| | | | Gloss | % | 98.7 | 85.5 | 95.1 |
| | Heating evaporation loss | | 100°C×100hr | % | 0.06 | 0.22 | 0.12 |
| | | | 100°C×200hr | % | 0.08 | 0.32 | 0.16 |
| | | | 100°C×300hr | % | 0.12 | 0.43 | 0.21 |

## Claims

1. A thermoplastic elastomer composition comprising components (A) to (C) below, wherein at least a portion of the composition is cross-linked:
(A) 100 parts by mass of an ethylene·α-olefin nonconjugated polyene copolymer;
(B) 10 to 200 parts by mass of a polypropylene-based resin; and
(C) 10 to 200 parts by mass of a softener having a paraffinic carbon atom content (% Cₚ) of 80% or more and 100% or less, as measured according to ASTM D3238-85 or ASTM D2140.

2. The thermoplastic elastomer composition according to claim 1, wherein the softener (C) comprises a biomass-derived softener.

3. The thermoplastic elastomer composition according to claim 1, wherein the softener (C) is a biomass-derived softener.

4. The thermoplastic elastomer composition according to claim 1, wherein the softener (C) further has a naphthenic carbon atom content (% C_{N}) of 20% or less and an aromatic carbon atom content (% C_{A}) of 5% or less, as measured according to ASTM D3238-85 or ASTM D2140.

5. The thermoplastic elastomer composition according to claim 1, wherein the softener (C) has a weight-average molecular weight (Mw) in terms of polystyrene as measured by gel permeation chromatography (GPC) of 900 or more.

6. The thermoplastic elastomer composition according to claim 1, wherein an evaporation loss of the softener (C) at 200°C under atmospheric pressure for 1 hour is 0.2% by mass or less.

7. The thermoplastic elastomer composition according to claim 1, wherein the softener (C) has a kinematic viscosity at 40°C of 40 mm²/s or more and 150 mm²/s or less.

8. The thermoplastic elastomer composition according to claim 1, wherein the softener (C) has a density at 15°C of 865 kg/m³ or less.

9. The thermoplastic elastomer composition according to claim 1, wherein a pour point of the softener (C) is -20°C or lower.

10. The thermoplastic elastomer composition according to claim 1, having a melt flow rate (MFR; 230°C, 10 kg load) measured according to JIS K 7210 being 1 to 150 g/10 min.

11. The thermoplastic elastomer composition according to claim 1, wherein the polypropylene-based resin (B) is at least one selected from the group consisting of a propylene homopolymer, a random copolymer of propylene and an α-olefin other than propylene, and a block copolymer of propylene and an α-olefin other than propylene.

12. The thermoplastic elastomer composition according to claim 1, wherein the polypropylene-based resin (B) consists of a block copolymer of propylene and an α-olefin other than propylene.

13. The thermoplastic elastomer composition according to claim 1, wherein the polypropylene-based resin (B) has a melting point of 80 to 170°C, and the composition further comprises 40 parts by mass or less of a component (D) below: (D) a propylene-ethylene copolymer having a melting point of 70°C or lower or having no melting point observed, and having a density of 800 to 900 kg/m³.

14. The thermoplastic elastomer composition according to claim 1, further comprising a crosslinking agent.

15. The thermoplastic elastomer composition according to claim 14, comprising 0.05 to 3 parts by mass of the crosslinking agent per 100 parts by mass of the ethylene·α-olefin nonconjugated polyene copolymer (A).

16. The thermoplastic elastomer composition according to claim 14, comprising 0.10 to 1 part by mass of the crosslinking agent per 100 parts by mass of the ethylene·α-olefin nonconjugated polyene copolymer (A).

17. The thermoplastic elastomer composition according to claim 14, wherein the crosslinking agent is an organic peroxide.

18. A molded body comprising the thermoplastic elastomer composition according to any one of claims 1 to 17.

19. A film or sheet comprising the molded body according to claim 18.

20. An automobile interior material comprising the molded body according to claim 19.
